# EUROPÄISCHE PATENTSCHRIFT

(11) **EP 2 006 447 B1**
(45) Veröffentlichungstag und Bekanntmachung des Hinweises auf die Patenterteilung: **31.10.2012**
(21) Anmeldenummer: 07120996.9
(22) Anmeldetag: 19.11.2007
(51) Int. Cl.: D21H 27/28, D21H 19/80, D21H 19/84, D21H 27/18, B44C 5/04, B32B 27/04, B32B 27/10

(54) **Abriebfestes Laminat mit besonderem optischem Effekt und Verfahren zu seiner Herstellung**
Abrasion resistant laminate with special optical effect and method of manufacturing the same
Laminé résistant à l'abrasion doté d'un effet optique particulier et son procédé de fabrication

(30) Priorität: 19.06.2007 DE 102007028603
(43) Veröffentlichungstag der Anmeldung: 24.12.2008
(73) Patentinhaber: DAKOR Melamin Imprägnierungen GmbH, 72535 Heroldstatt (DE)
(72) Erfinder: Barwich, Stefan, 89150 Laichingen (DE); Beck, Elmar, 72535 Heroldstatt (DE)
(74) Vertreter: Patentanwälte Dr. Solf & Zapf

(56) Entgegenhaltungen:
- EP-A- 1 595 718
- EP-A- 1 719 638
- DE-A1- 19 903 914

## Beschreibung

Die vorliegende Erfindung betrifft ein Laminat mit einem Träger und mit einer Dekorfolie, wie einem Overlay zur Herstellung eines Laminatfußbodens oder einer Möbeloberfläche, wobei die Dekorfolie eine einseitig mit einer Druckschicht versehene Papierschicht, eine aus einer ersten Kunststoffmischung gebildete Imprägnierung und eine aus einer zweiten Kunststoffmischung gebildete Schicht umfasst, die partikelförmiges abriebmindemdes Material enthält.

Des Weiteren betrifft die vorliegende Erfindung ein Verfahren zur Herstellung eines derartigen Laminats wie in Anspruch 13 definiert.

Eine ähnliche Folie und ein ähnliches Verfahren sind aus der europäischen Patientschrift EP 1 068 394 B1 bekannt. Diese bezieht sich auf ein Verfahren zum Imprägnieren von zum Herstellen hochabriebfester Laminat-Fußbodenmaterialien verwendeter Dekorpapiere, wobei das Dekorpapier zunächst mit einem Aminoharz angefeuchtet und dadurch imprägniert wird, wobei die Menge des Harzes mittels Dosierwalzen geregelt wird, und wobei dann auf das angefeuchtete nasse Dekorpapier zusätzlich oberseitig eine Schicht aus einem Aminoharz in spezieller Dispersion aufgedüst wird. Das Produkt des bekannten Verfahrens, ein Dekorpapier mit einer gleichmäßigen, ein Aminoharz mit partikelförmigem Siliciumcarbid, Korund oder Aluminiumoxid aufweisenden Beschichtung, die keine Zellulosederivate aufweist, kann auf einer Kurztaktpresse auf eine HDF-Trägerplatte gepresst werden. Diese Platte wies nach einem Abriebtest entsprechend der Norm DIN EN 13329 einen Abriebwert von IP 12000 auf.

Der Abriebtest entsprechend der Norm DIN EN 13329 sieht vor, dass zwei mit Schmirgelpapierstreifen bestückte Reibräder in eine spezielle Prüfeinrichtung eingesetzt werden, in deren Halter die Prüfkörper eingespannt sind, wo sie durch die Reibräder beaufschlagt werden. Nach jeweils 100 Umdrehungen werden die Prüfkörper auf Abrieb überprüft und nach jeweils 200 Umdrehungen wird das Schmirgelpapier durch neues ersetzt. Die Prüfung wird solange fortgesetzt, bis der sogenannte Anfangsabriebpunkt (IP) erreicht ist. Darunter versteht man den Punkt, an dem unter den in der Norm detailliert definierten Bedingungen erstmalig ein klar erkennbarer Durchrieb eines im Prüfkörper vorhandenen Dekordruckes auftritt. Die zum Erreichen dieses Punktes benötigte Anzahl von Umdrehungen wird aufgezeichnet und stellt ein Maß für die Abriebfestigkeit dar. Die Beständigkeit gegen Abrieb eines Laminatbodens wird dann in Abriebklassen gemäß der nachstehenden Tabelle angegeben.

**Tabelle 1: Eintellung der Abriebklassen nach DIN EN 13329**

| Abriebklasse | Anforderung (IP-Wert) Anzahl Umdrehungen | Anwendung |
|---|---|---|
| AC1 | mindestens 900 | Schlafzimmer |
| AC2 | mindestens 1500 | Wohnzimmer |
| AC3 | mindestens 2000 | Diele Kleinbüro |
| AC4 | mindestens 4000 | Hotel |
| AC5 | mindestens 6000 | Kaufhaus |

Eine ähnliche Klassifizierung findet sich auch in der Norm DIN EN 438 "Dekorative Hochdruck-Schichtpressstoffplatten (HPL) - Platten auf Basis härtbarer Harze (Schichtpressstoffe) - Teil 2: Bestimmung der Eigenschaften".

In der genannten europäischen Patentschrift EP 1 068 394 B1 wird für das Produkt des beschriebenen Verfahrens keine Druckschicht auf dem Dekorpapier erwähnt, da dieser im Zusammenhang mit dem beschriebenen Verfahren offenbar eine weniger hohe Bedeutung zugemessen wird. Jedoch ist es in der Praxis üblich, neben unbedruckten, beispielsweise getönten, auch bedruckte Papiere einzusetzen, deren Druckbild dann durch die partikelhaltige abriebfeste Schicht überdeckt wird, wobei nachteiligerweise die optische Anmutung der Dekorfolie leiden kann. Eventuell angestrebte spezielle optische Effekte werden somit gemindert bzw. gehen verloren oder sind überhaupt nicht erzielbar.

In der DE 103 34 008 A1 sind ein Verfahren zum Lackieren von Trägerwerkstoffen mit unterschiedlichen Glanzgradzonen und ein nach diesem hergestellter Trägerwerkstoff beschrieben. Aus dieser Anmeldung wird deutlich, dass einer Bedruckung und der Art ihrer Ausbildung aufgrund des mit ihr erzielbaren dekorativen Effekts durchaus eine hohe Bedeutung zukommt. Gemäß dem bekannten Verfahren wird der Trägerwerkstoff nacheinander mehreren Druckvorgängen mit matter und glänzender Beschichtung, farblos oder farbig, unterzogen. Dadurch soll insbesondere eine Dekorfolie mit unterschiedlichen Glanzgradzonen hergestellt werden. Um eine Verbesserung des Druckbildes zu erreichen und eine Faltenbildung zuverlässig zu vermeiden, ist dabei vorgesehen, dass auf den Trägerwerkstoff zunächst eine Vorbeschichtung aufgetragen wird und dass beim anschließenden Druck in mindestens zwei Druckwerken durch entsprechend ausgestattete Druckzylinder und deren passgenaue Einstellung die Druckfarbe exakt über die gewünschten Bereiche des Dekordruckbildes gelegt wird. Dazu ist in einer Ausführungsform als Trägerwerkstoff imprägniertes Papier vorgesehen, welches mit Kombinationen aus Melaminharz, Hamstoffharz, Acrylatdispersion, Acrylat-Copolymer-Dispersion, Polyesterharzen oder dergleichen getränkt bzw. bereits auf der Papiermaschine mit Harzeinträgen versehen worden ist. Als Druckverfahren, das insbesondere mittels eines härtbaren Lackes erfolgt, der mit einer deckfähigen Pigmentpräparation eingestellt werden kann und mit Buntpigment-Präparationen eine gewünschte Färbung erhält, können dabei direkter oder indirekter Tiefdruck, Flexo-Druck, Offset-Druck oder Rotations-Siebdruck eingesetzt werden. Da der bekannte Trägerwerkstoff zur Beschichtung von Möbelfolien bestimmt ist, sieht das genannte Verfahren nicht - wie die EP 1 068 394 B1 - die Aufbringung einer Schicht vor, die partikelförmiges abriebmindemdes Material enthält.

Auch die DE 199 03 914 A1 enthält Ausführungen zum bekannten Stand der Technik betreffend die Herstellung von Laminaten. Demzufolge besteht dieser darin, dass ein Laminat-Verbund mindestens vier Schichten aufweist, wobei auf einer Trägerplatte ein mit einem Dekor bedrucktes Papier auflaminiert wird, das auf der Sichtseite den typischen optischen Eindruck beispielsweise einer späteren Fussbodenplatte erzeugt. Das Dekorpapier ist durch eine weitere Schicht aus einem Overlaypapier geschützt, wobei das Overlaypapier auf seiner Oberseite beispielsweise mit Korund abriebfest beschichtet ist. Dekorpapier und Overlay sind beispielsweise mit Melamin imprägniert. Auf der Rückseite der Trägerplatte ist eine Gegenzugschicht angeordnet, die verhindert, dass sich die Trägerplatte aufgrund einer einseitigen Beschichtung mit Dekorpapier und Overlay aufgrund deren Zugspannung durchbiegt. Das Spezifikum der DE 199 03 914 A1 gegenüber einem solchen Laminat besteht in einem widerstandsfähigen, mit einem Dekor versehenen Overlay, welches eine Trägerschicht mit einer als Sichtseite dienenden Oberseite und einer im applizierten Zustand dem Belagelement zugewandten Unterseite aufweist. Hierbei ist die Trägerschicht imprägniert und weist auf ihrer Oberseite eine Schicht, die ein abriebfestes Material, gegebenenfalls gemischt mit einem Bindemittel, enthält, und auf ihrer Unterseite mindestens eine farbgebende Schicht auf. Zur Herstellung des Overlays wird ein Verfahren beschrieben, bei dem die Trägerschicht zuerst imprägniert und anschließend auf die Oberseite ein abriebfestes Material und auf die Unterseite eine farbgebende Schicht aufgetragen wird. Das Verfahren sieht vor, dass ein - wie vorstehend beschrieben - hergestelltes Overlay mit seiner Unterseite auf den Laminatträger gelegt und mit diesem verpresst wird und gegebenenfalls anschließend auf der anderen Seite des Laminatträgers eine Gegenzugschicht aufgebracht wird. Auf ein Dekorpapier wird dabei vollständig verzichtet. Das Overlay wird unmittelbar auf den Träger aufgepresst.

Aus der EP 1 719 638 A2 ist des Weiteren ein Dekorlaminat bekannt, welches widerstandsfähig gegen Abrieb und Zerkratzen Ist. Dieses umfasst ein Substrat, eine Dekorfolie auf dem Substrat sowie eine Beschichtung auf der Dekorfolie. Die Beschichtung enthält eine Mischung aus einer ersten mineralischen Teilchenfraktion und aus einer zweiten mineralischen Teilchenfraktion, wobei die Größe der Teilchen in der ersten Fraktion etwa zwischen 3 bis 8 µm liegt und die der zweiten Fraktion kleiner als etwa 1 µm ist. Die Beschichtung enthält auch ein Bindemittel für die Teilchen. Eine Druckschicht wird in der EP 1 719 638 A2 nicht beschrieben.

Die EP 1 595 718 A1 beschreibt ein Verfahren zur Herstellung einer Dekorschicht, bei dem in einem ersten Verfahrensschritt ein Aufbringen eines Polymers auf die Oberfläche eines Substrats erfolgt, woran sich ein teilweises Aushärten des Polymers in einem zweiten Verfahrensschritt anschließt. Dieser ist gefolgt vom Auflegen eines Papiers oder eines nicht gewebten Materials als Deckschicht und einem abschließendem vollständigem Aushärten des Polymers unter Wärme und Druck. In einem parallelen Verfahrensschritt kann ein Bedrucken des Papiers oder des nicht gewebten Materials als Deckschicht erfolgen, wobei das Deckschicht-Material transparent oder pigmentiert ist. Der Einsatz von Stoffen, welche die Abriebfestigkeit erhöhen, ist nicht vorgesehen.

Bei im Vorfeld der Erfindung durchgeführten Entwicklungsarbeiten, die dem Ziel dienten, den optischen Ausdruck von Möbeloberflächen und auch Laminatfußböden mit Metallic- oder Perlmutteffekten besser darstellen zu können, wurde festgestellt, dass mit der derzeit eingesetzten Drucktechnik ein gewünschter "schillernder" oder ähnlicher Spezialeffekt beim Bedrucken eines Dekorpapiers zwar erreicht werden kann, dass dieser sich aber verliert, wenn ein Overlay, das gleichzeitig mit der Dekorativfunktion auch die Funktion einer abriebfesten Nutzschicht darstellen soll, auf die Dekorseite einer Trägerplatte, z. B. einer HDF-Trägerplatte, aufgepresst wird.

Der vorliegenden Erfindung liegt die Aufgabe zugrunde, ein Laminat der eingangs genannten Art und ein Herstellungsverfahren für ein derartiges Laminat zu schaffen, wobei das Laminat hinsichtlich seiner Abriebfestigkeit den Anforderungen der Normen DIN EN 13329 und DIN EN 438 genügt und dabei ein hochwertiges klares Druckbild mit ansprechender optischer Anmutung aufweist Dass heißt insbesondere, dass mit Hilfe des bedruckten Overlays zusätzliche spezielle optische Effekte - ohne das Druckbild eines darunterliegenden Dekorpapiers zu verfälschen - erzielt werden sollen.

Erfindungsgemäß wird dies durch ein Laminat mit den Merkmalen des Anspruchs 1 und ein Verfahren mit den Merkmalen des Anspruchs 13 erreicht.

In dem zur Herstellung des erfindungsgemäßen Laminats eingesetzten Overlay bildet die Druckschicht somit die oberste Schicht des laminierten Fertigproduktes, wobei, insbesondere, wenn die Papierschicht eine spezifische Rohpapiermasse Im Bereich von 15 bis 35 g/m² aufweist, wie sie charakteristisch für sogenannte Overlaypapiere ist, die aus der ersten Kunststoffmischung gebildete, insbesondere nach dem Druck vorgenommene, Imprägnierung, nicht nur auf das Papier, sondern vorteilhafterwelse auch auf die Druckschicht verfestigend wirken kann. Die Druckschicht selbst kann dabei bevorzugt im Tiefdruck erzeugt werden.

Der Tiefdruck ist ein Druckverfahren, bei dem druckende Elemente als Vertiefungen in einer Druckform ausgeführt sind. Ein insbesondere zylindrischer und zumindest an der Oberfläche metallischer, wie mit einer Kupferschicht versehener, Druckträger taucht mit einem Teil seines Umfangs in eine Wanne mit dünnflüssiger Farbe ein. Die Farbe wird von den erhabenen, nicht druckenden Flächen des Druckträgers mit einer Rakel abgestrichen. Stege, die den Zylinder wie ein waffelartiges Netz überziehen, haben die Funktion, die Rakel sauber auch über große zu druckende Flächen zu führen. Die Druckfarbe befindet sich danach in den Vertiefungen, sogenannten Näpfchen. Das zu bedruckende Gut - vorzugsweise Papier, aber auch Kunststofffolien - und der Druckträger werden anschließend mechanisch aneinander gepresst, wobei das Gut die Farbe aus den Näpfchen aufnimmt. Durch mehr oder weniger tiefe Näpfchen können im Tiefdruck verschieden dicke Farbschichten gedruckt werden, wodurch sich die Tonwerte "hell/dunkel" verändern. Dies ist in anderen Druckverfahren nicht möglich. Der Tiefdruck liefert auf diese Weise auch sehr intensive - gesättigte - Farben, die z. B. im Flexo- und Offsetdruck nicht erzielbar sind. Der Vorteil des Tiefdrucks besteht also darin, dass sich Farbdrucke erzielen lassen, die sich durch hervorragende Brillianz, satte Farbwirkung in den Tiefen und gleichzeitig eine feine Tonwertabstufung in den lichten Partien auszeichnen.

Je nach Größe und Tiefe der Näpfchen, die durch einen Ätzvorgang, durch eine elektromechanische Gravur oder mit einem Laserstrahl erzeugt werden können, werden im Tiefdruck konventionelle, halbautotypische und autotypische Verfahren unterschieden. Im konventionellen Verfahren sind die Näpfchen gleich groß und unterschiedlich tief. Im halbautotypischen Verfahren sind die Näpfchen unterschiedlich groß und tief. Im autotypischen Verfahren variieren die Näpfchen in der Tiefe, aber nicht in der Größe. Bei der elektromechanischen Gravur taucht ein pyramidenförmiger Diamantstichel in die insbesondere aus Kupfer bestehende Oberfläche der Druckform ein und schneidet einen Napf aus. Je nach Eindringtiefe erzeugt er dabei auch eine andere Oberfläche. Das Verfahren ist also sowohl flächen- als auch tiefenvariabel (halbautotypisch). Die Farbaufnahmekapazität eines Näpfchens bestimmt dabei die Ausdehnung des gedruckten Rasterpunktes wobei für tiefere Töne der Rasterpunkt eine größere Ausdehnung haben muss als für lichtere Töne und entsprechend die Druckdichte im Bereich tieferer Töne insgesamt größer sein muss. Über die Ausdehnung des Rasterpunktes entscheidet nicht allein die Oberflächenausdehnung des jeweiligen Näpfchens, sondern dessen Farbaufnahmekapazität bzw. sein Schöpfvolumen. Unter diesen Gesichtspunkten ist erfindungsgemäß ein Raster im Bereich von 40 bis 60 pro cm, also eine Näpfchenanzahl im Bereich von 1600 bis 3600 pro cm², bevorzugt. Die Näpfchen haben dabei einen Abstand im Bereich von etwa 165 bis 250 µm. Die Dicke der aufgetragenen Farbschicht kann im Bereich von 4 µm an hellen Stellen bis zu 40 µm an dunklen Stellen variieren.

Der Tiefdruck kann im Zusammenhang mit der Erfindung sowohl als direktes, als auch bevorzugt als indirektes Verfahren realisiert werden. Beim indirekten Verfahren, das auch als Tampondruck bezeichnet wird, wird die Farbe zunächst auf ein sogenanntes Druckklischee aufgetragen, das die Vertiefungen zur Aufnahme der Druckfarbe enthält. Wie vorstehend für das direkte Verfahren beschrieben, wird die Farbe dann von den erhabenen, nicht druckenden Flächen des Druckträgers mit einer Rakel abgestrichen. Gleichzeitig bewegt sich ein - beispielsweise bevorzugt aus Silikonkautschuk bestehender - sogenannter Tampon über das mit Farbe gefüllte Druckklischee, wird dort abgesenkt und auf das Klischee aufgedrückt, so dass er das Druckbild übernimmt. Das Druckbild wird dann auf das zu bedruckende Gut übertragen, indem der Tampon - wie beim direkten Verfahren die Druckform selbst - auf das zu bedruckende Gut aufgepresst wird. Hierbei kann eine nahezu 100-prozentige Farbübertragung erzielt werden. Das Bedrucken kann dabei vorteilhafterweise nicht nur bei einer unregelmäßig geformten Oberfläche des zu bedruckenden Gutes vorgenommen werden, wobei auch mechanisch empfindliche Oberflächen bedruckt werden können, sondern es sind ohne Zwischentrocknung auch Mehrfachdrucke im Nass-in-Nass-Verfahren möglich, Klischees und Farbe sind innerhalb weniger Minuten austauschbar und je nach verwendetem Farbtyp lassen sich extrem hohe Beständigkeiten gegen mechanischen Abrieb und Chemikalien erzielen. Letzteres gilt vor allem beim Einsatz von Zwei-Komponenten-Farben, die vor dem Verdrucken mit einem Härter gemischt werden, der chemisch mit der Farbe reagiert, so dass ein vernetzter Farbfilm entsteht. Erfindungsgemäß können im Tampondruck Klischees bis zu einer Tiefe von 20 bis 35 µm eingesetzt werden, woraus sich bei Einsatz konventioneller Farben ein gedruckter Farbfilm von etwa 7 µm ergibt. Diese Schichtdicke kann aber durch einen Mehrfachdruck erhöht werden.

Bei der Herstellung von Effekt-Folien spielt auch die Teilchengröße der eingesetzten Farbpigmente eine wichtige Rolle. Die mit den verschiedenen Teilchengrößen erzielbaren Effekte sind dabei sehr unterschiedlich. So können relativ deckende, seidige Glanzgrade mit feinsten Fraktionen (Korngröße < 5 µm) erreicht werden, während mit zunehmender Korngröße (bis zu 125 µm) sich ein mehr glitzernder Effekt einstellt, wobei sich aber das Deckvermögen der Farbe vermindert. Beim Druck sollten die Rasterweiten und Näpfchengeometrien an die Teilchengröße der Pigmente angepasst werden. Die vorstehend genannte Rasterweite im Bereich von 40 bis 60 pro cm kann dabei mit Vorteil für Pigment-Teilchengrößen im Bereich von 10 bis 125 µm zur Anwendung kommen. Bei Pigment-Teilchengrößen im Bereich von 5 bis 25 µm empfehlen sich allerdings höhere Rasterweiten im Bereich von 70 bis 100 pro cm.

Beim elektromechanischen Gravurverfahren hängt bei gleicher Oberfläche eines Näpfchens die Tiefe vom Spitzenwinkel des Stichels ab. Mit einem kleineren Spitzenwinkel wird ein höheres Näpfchenvolumen geschnitten als mit einem größeren Spitzenwinkel. Dieser Spitzenwinkel sollte insbesondere bei Einsatz der bevorzugt erfindungsgemäß zur Anwendung kommenden lösungsmittelbasierenden Farben bei etwa 110° bis 120° liegen, also kleiner sein als der übliche Standardwinkel von 130°, so dass ein höheres Schöpfvolumen erzeugt wird. Bei wasserbasierenden Farben, die eine niedrigere Viskosität aufweisen als lösungsmittelbasierende Farben, kann der Spitzenwinkel größer als der Standardwinkel oder genauso groß sein, also bei 130° bis 140° liegen. Was die Näpfchenform betrifft, sollte diese bevorzugt als sogenannter Quernapf ausgeführt sein, was dadurch erreicht werden kann, dass der Druckzylinder beim Gravieren verlangsamt gedreht wird. Es entsteht somit eine gestauchte Raute, bei der die längs des Zylinders verlaufende Diagonale größer ist als die in Umfangsrichtung des Zylinders verlaufende Diagonale.

Bei geätzten Näpfchen kann die Tiefe der Näpfchen etwa 50 bis 55 µm betragen, wobei das Verhältnis der Näpfchenbreite zur Breite der zwischen den Näpfchen liegenden Stege bei etwa 6 : 1 bis 12 : 1 liegen sollte.

Weitere vorteilhafte Merkmale sind aus den Unteransprüchen und aus der nachfolgenden Beschreibung zu entnehmen. Anhand eines durch die beiliegende Zeichnung veranschaulichten Ausführungsbeispiels wird die Erfindung näher erläutert.

Dabei zeigen
- Fig.1: eine schematisierte Querschnittsdarstellung einer bevorzugten Ausführung eines erfindungsgemäßen Laminats mit einer im Rahmen der Erfindung eingesetzten abriebfesten Dekorfolie, die auf einen Träger laminiert ist,
- Fig. 2: eine vergrößerte Aufsicht auf eine zur Erzeugung einer Druckschicht einer im Rahmen der Erfindung verwendeten abriebfesten Dekorfolie einsetzbaren Druckform.

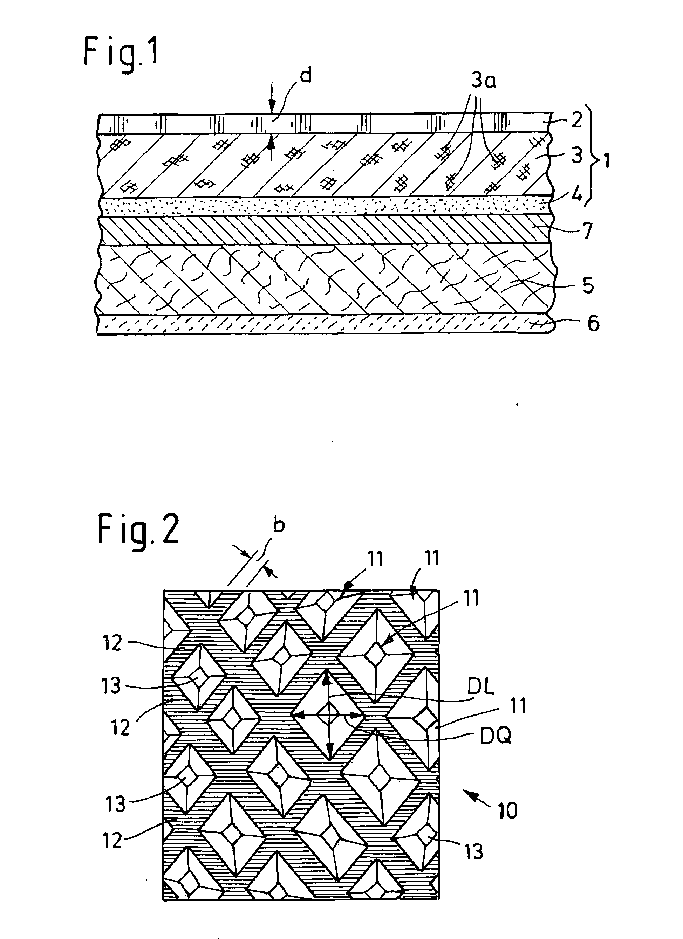

Wie zunächst aus Fig. 1 hervorgeht, umfasst eine abriebfeste Dekorfolie 1, insbesondere ein Overlay 1 zur Herstellung eines Laminatfußbodens, eine einseitig mit einer Druckschicht 2 versehene Papierschicht 3, eine aus einer ersten Kunststoffmischung gebildete Imprägnierung 3a, mit der die Papierschicht 3 versehen ist und eine aus einer zweiten Kunststoffmischung gebildeten Schicht 4, die partikelförmiges abriebminderndes Material enthält.

Die Papierschicht 3 kann eine spezifische Rohpapiermasse im Bereich von 15 bis 35 g/m² aufweisen und wird zunächst im Tiefdruckverfahren mit der Druckschicht 2 bedruckt. Hierzu kann eine in Fig. 2 dargestellte Druckform 10 zum Einsatz kommen. Eine Dicke d der aufgetragenen Druckschicht 2 kann im Bereich von 4 µm bis 40 µm liegen.

Die mit der Druckschicht 2 versehene Papierschicht 3 wird imprägniert. Bei einem dazu eingesetzten ersten Kunstharz kann es sich bevorzugt um ein Aminoharz handeln, welches insbesondere ein in flüssiger Form vorliegendes Melamin-Formaldeyd-Oligomer ist. Außerdem kann mit Vorteil vorgesehen sein, dass dem Aminoharz vor dem Imprägnieren zur Flexibilisierung des Tränkharzes eine Polymerdispersion zugemischt wird. Eine solche Dispersion kann beispielsweise aus einem oder mehreren Acrylat- oder Methacrylat-, Vinylacetat-Homopolymerisat(en) und/oder Styrol-Acrylat-, Styrol-Methacrylat-, Polybutadien-Styrol-Co-Polymer(en) bestehen und führt vorteilhafterweise dazu, dass das behandelte Imprägnat nicht nur flexibler, sondern auch höher adhäsiv für die in der nächsten Verfahrensstufe aufzutragende weitere Schicht 4 wird, die sich dadurch besser applizieren lässt. Außerdem kann dem Aminoharz vor dem Imprägnieren ein Härter zur Förderung der Vernetzung sowie gegebenenfalls ein Netzmittel zugemischt werden. Ebenso kann dem der Imprägnierung dienenden Kunstharz vor dem Auftrag ein Tränkhilfsmittel zugemischt werden. Dadurch wird in dem Kunstharzsystem eine Absenkung der Oberflächenspannung herbeigeführt, wodurch die Penetrationszeit des Harzes in die Poren des Papiers abgekürzt und die Homogenität der Imprägnierung begünstigt wird.

Zum Imprägnieren wird die Papierschicht 3 zunächst mit der ersten Kunstharzmischung gesättigt, wobei insbesondere das Kunstharz zunächst an die Rückseite des Dekorpapiers 1 angespült wird, dann das Kunstharz ohne weitere Auftragung in einer sogenannten Atemstrecke in das Dekorpapier 3 penetriert und danach das Papier in einer Tauchstrecke nochmals mit dem ersten Kunstharz beladen wird. Zur Realisierung dieser Verfahrensstufe kann ein übliches Imprägnierwerk eingesetzt werden, wobei die Menge des Harzes mittels Dosierwalzen geregelt wird. Die Auftragsmenge für die Imprägnierung kann im Bereich von 40 bis 120 g/m², vorzugsweise im Bereich von 60 bis 90 g/m² liegen.

In einer sich im Sinne einer Nass-in-Nass-Auftragung unmittelbar anschließenden nachfolgenden Verfahrensstufe, die keinen zweiten Maschinendurchlauf erfordert, wird dann auf das feuchte Imprägnat eine Schicht 4 aufgebracht, die ein zweites Kunstharz sowie partikelförmiges abriebminderndes Material enthält. Anschließend erfolgt eine Wärmebehandlung zur Aushärtung der Kunstharze und zur Entfernung der Feuchte aus dem feuchten beschichteten Imprägnat. Eine nach Aushärtung und Trocknung vorliegende Restfeuchte kann insbesondere im Bereich von 3 Masseprozent bis 9 Masseprozent liegen. Zur Trocknung kann im Sinne einer schonenden Behandlung, jedoch effizienten und präzisen Arbeitsweise ein kontinuierlich arbeitender Konvektions-Bandtrockner, insbesondere ein Schwebelufttrockner mit einer Zeit-, Temperatur- und Umluftsteuerung, eingesetzt werden.

Die spezifische Masse der partikelförmiges abriebminderndes Material enthaltenden Schicht 4 kann nach der Trocknung insbesondere einen Wert im Bereich von 3 bis 70 g/m² annehmen, während die gesamte Dekorfolie 1 als Fertigprodukt bevorzugt eine spezifische Masse im Bereich von 60 bis 250 g/m² aufweisen kann.

Das zur Aufbringung der Schicht 4 eingesetzte zweite Kunstharz kann mit Vorteil ebenfalls ein Aminoharz, insbesondere ein in flüssiger Form vorliegendes, gegebenenfalls methyliertes, Melamin-Formaldehyd-Oligomer, sein. In der fertigen Dekorfolie 1 kann dadurch vorteilhafterweise eine hohe Chemikalienresistenz, eine gute Haftung auf den anderen Schichten und eine niedrige Formaldehydemission eingestellt werden. Bei der Verarbeitung zeichnet sich das System durch einen guten Verlauf auf der zu beschichtenden Oberfläche aus. Bei der Imprägnierung und bei der Beschichtung kann eine optimale Viskosität der eingesetzten Kunstharze vorteilhafterweise durch die Zumischung von Wasser eingestellt werden.

Bei dem in der Schicht 4 eingesetzten partikelförmigen abriebmindernden Material kann es sich bevorzugt um Korund, Siliciumdioxid oder auch um Siliciumcarbid handeln. Dieses Material kann insbesondere mit einer Korngrößenverteilung im Bereich von F 120 bis F 280 nach dem Standard der FEPA (Fédération Européene des Fabricants de Produits Abrasifs) für Schleifkörnungen zur Anwendung kommen. Der mittlere Wert der Korngröße liegt bei der Korngrößenverteilung F 280 im Bereich von 36,5 +/- 1,5 µm. Es wäre jedoch auch möglich, anderen Standards (JIS R 6001, ANSI) unterliegende vergleichbare Körnungen einzusetzen oder durch Mischen zweier dieser Körnungen eine bimodale Korngrößenverteilungskurve zu bilden, um eine höhere Packungsdichte der Körner zu erzielen.

Der Anteil des partikelförmigen abriebmindernden Materials und/oder die Auftragsmenge in der Schicht kann dabei vorteilhafterweise in Abhängigkeit von einer zu erzielende Abriebfestigkeit (Tabelle 1) der Folie 1 eingestellt werden. Je höher die zu erzielenden Abriebfestigkeit sein soll, desto größer muss der Anteil des partikelförmigen abriebmindernden Materials und/oder die Auftragsmenge in der Schicht 4 gewählt werden. Dabei können problemlos Abriebwerte in den Klassen AC3, AC4 und AC5 erreicht werden. Dieser Anteil des partikelförmigen abriebmindernden Materials kann - bezogen auf 100 Masseteile des zweiten Kunstharzes bzw. Kunstharzgemisches - im Bereich von 5 bis 80 Masseteilen, vorzugsweise im Bereich von 20 bis 40 Masseteilen, liegen. Allerdings wird die Abriebfestigkeit nicht allein durch die partikelhaltige Schicht 4, sondern durch ein synergistisches Zusammenwirken mit der darüberliegenden imprägnierten Papierschicht 3 und der darauf befindlichen Druckschicht 2 bestimmt.

Der Auftrag der Schicht 4, die das partikelförmige abriebmindernde Material enthält, erfolgt erfindungsgemäß auf der der Druckschicht 2 gegenüberliegenden Seite der Papierschicht 3, z. B. mittels einer Düse, die unter dem Namen ARP-Düse bekannt geworden ist, wobei die Auftragsmenge wiederum mit Hilfe von Dosierwalzen geregelt werden kann.

Die fertige Dekorfolie wird danach, zusammen mit einem bedruckten und imprägnierten Dekorpapier 7, z. B. zur Herstellung eines Fußbodenlaminats, in an sich bekannter Art und Weise auf einen Träger 5 laminiert und kann beispielsweise in einer Kurztaktpresse auf eine HDF-Trägerplatte gepresst werden. Diese kann unterseitig mit einem sogenannten Gegenzugpapier 6 versehen werden.

Wie Fig. 2 veranschaulicht, kann die Druckschicht 2 im direkten oder indirekten Tiefdruck hergestellt werden, wobei vorzugsweise eine elektromechanisch gravierte Druckform 10 eingesetzt wird.

Der Tiefdruck kann insbesondere in einem halbautotypischen und autotypischen Verfahren erfolgen. Der dargestellte Ausschnitt der Oberfläche der Druckform 10 weist auf ein halbautotypisches Verfahren hin, bei dem in die Form eingravierte Näpfchen 11 unterschiedlich groß und tief sind. Folglich variiert auch eine Breite b von zwischen den Näpfchen 11 liegenden Stegen 12.

Für den Druck können verschiedenartige Farben, beispielsweise Universal- bzw. Standardfarben oder auch polymere Zwei-Komponenten-Farben, die einen vernetzend wirkenden Härter enthalten, eingesetzt werden. insbesondere ist es mit Vorteil auch möglich, Effektpigmente - wie vom Typ der Metalloxid-Glimmerpigmente, auf metallischer Basis, wie mit Aluminium-Partikeln, oder auf der Basis mikrokristalliner Glasprismen - in die Farbe einzubringen.

Diese Effektpigmente sind in verschiedenen Teilchengrößen verfügbar, wobei sich - wie bereits oben dargestellt - die mit der Korngröße verbundenen Effekte unterscheiden. Sie reichen von seidigem Glanz über Perlmutteffekte bis zu Metallic- oder Glitzereffekten.

Beispielsweise sind zur Erzielung eines Perlmutteffektes von der Firma Hartmann/SunChemicals spezielle Farben erhältlich, die zusammen mit Aminoharzen einsetzbar sind. Bei Kontakt mit Formaldehyd und Melamin, wie er bei der Imprägnierung 3a der Papierschicht 3 auftreten kann, sind diese Farben beständig. Es handelt sich um Zubereitungen auf der Basis von Protein/Acrylat, die bei einem Feststoffgehalt von 33 bis 41 Prozent Pigmente einer Korngröße im Bereich von 10 bis 40 µm enthalten und hochviskos (> 1000 mPas) ausgeliefert werden. Diese Farben sind wasserlöslich bzw. -verdünnbar. Bei ihrer Verwendung empfiehlt sich für das Raster einer im Tiefdruck verwendeten Druckform 10 ein Wert im Bereich von 40 bis 60 pro cm.

Bei Pigmenten im oberen genannten Grenzbereich der Korngröße kann auch das gröbere Raster von bis zu 32 pro cm (ca. 1000 Näpfchen pro cm²) und bei Pigmenten im unteren Grenzbereich - wie bereits erwähnt - ein feineres Raster von bis zu 80 oder 100 pro cm (6400 oder 10000 Näpfchen pro cm²) verwendet werden.

Bei einer im Tiefdruck verwendeten Druckform 10, wie sie in Fig. 2 dargestellt ist, wird eine Tiefe der Näpfchen 11 durch einen Spitzenwinkel eines zur Gravur der Druckform 10 eingesetzten Stichels bestimmt. Dieser Winkel, der auch durch die Viskosität der eingesetzten Farbe bestimmt wird, kann beispielsweise mit Vorteil bei 120° liegen. Die durch das Rastermaß vorgegebene Fläche, die Näpfchenform und die Tiefe bestimmen das Schöpfvolumen eines Näpfchens 11. Hierbei ist es von Vorteil, wenn - wie dargestellt - die Form der Näpfchen 11 durch eine Raute beschrieben wird, bei der eine in Längsrichtung einer zylindrischen Druckform 10 verlaufende Diagonale DL größer ist als eine in Umfangsrichtung des Zylinders verlaufende Diagonale DQ. Auch größere Teilchen, die ein Tiefenmaß des Näpfchens von beispielsweise 40 µm überschreiten, können so entlang der Diagonale DL ausgerichtet leicht im Näpfchen 11 Platz finden und beim Druck auf einen Tampon oder direkt auf die Papierschicht 3 gebracht werden.

Wie aus den vorstehenden Ausführungen hervorgeht, ist die vorliegende Erfindung nicht auf das dargestellte Ausführungsbeispiel beschränkt. So fällt es beispielsweise auch in den Rahmen der Erfindung, wenn ein anderes Druckverfahren, wie beispielsweise Flexo-Druck, Offset-Druck oder Rotations-Siebdruck, zum Einsatz kommt.

Auch die spezifischen Parameter eines Tiefdruckverfahrens, insbesondere der exemplarisch dargestellten Druckform 10, können, insbesondere was die Geometrie der Näpfchen 11 betrifft, von den dargestellten abweichen, ohne dass der Rahmen der Erfindung verlassen wird. So wurde bisher nicht erwähnt, dass zur Gravur der Druckform 10 auch mit Vorteil ein Stichel eingesetzt werden kann, der die Form eines Pyramidenstumpfes hat. Der Einsatz eines solchen Stichels, auf den die uniformen Bodenflächen 13 in Fig. 2 hinweisen, gestattet es, durch die Gestaltung flacherer oder steilerer Wände 14 der Näpfchen 11 das Schöpfvolumen in gewünschter Weise zu variieren.

Die Verteilung von Glimmer oder anderen Effekten im Dekorbild der erfindungsgemäßen Dekorfolie 1 kann sich aus einer das Druckbild bestimmenden Strukturierung bzw. Musterung eines Druckzylinders ergeben oder auch als "all over" auf die Papierschicht 3 gedruckt sein, wobei im letzteren Fall die Effektzonen "unkontrolliert", d. h. nicht mit einem sich strukturgleich wiederholenden Muster, auf der Oberfläche der Dekorfolie 1 angeordnet sind. Die erste Möglichkeit, bei der die Dekorfolie 1 auch mit bestimmten Referenzmarken versehen werden kann, ist besonders dann von Vorteil, wenn die Dekorfolie 1 in jeweils gleich große Bögen geschnitten und nach diesem Schnitt auf einer Kurztaktpresse oder auch auf ungeschnitten auf einer kontinuierlichen Presse zu Laminaten mit strukturgleichem Dekor verarbeitet werden soll, wobei die Effektzonen des transparenten Overlays 1 - zumindest an definierten Stellen - mit dem Druckbild des darunterliegenden Dekorpapiers 7 kongruent sein sollen.

### Bezugszeichen

- 1: Dekorfolie
- 2: Druckschicht
- 3: Papier (Dekorpapier)
- 3a: Imprägnierung von 3
- 4: partikelhaltige Schicht
- 5: Träger
- 6: Gegenzugpapier
- 7: imprägniertes, Dekorpapier

- 10: Druckform für 2
- 11: Näpfchen von 10
- 12: Steg zwischen 10/10
- 13: Bodenfläche von 11
- 14: Wand von 11

- b: Breite von 12
- d: Dicke von 2
- DL: große Diagonale von 11
- DQ: kleine Diagonale von 11

## Patentansprüche

1. Laminat, mit einem Träger (5) und mit einer Dekorfolie (1), wie einem Overlay zur Herstellung eines Laminatfußbodens oder einer Möbeloberfläche, wobei die Dekorfolie (1) eine einseitig mit einer Druckschicht (2) versehene Papierschicht (3), eine aus einer ersten Kunststoffmischung gebildete Imprägnierung (3a) und eine aus einer zweiten Kunststoffmischung gebildete Schicht (4) umfasst, die partikelförmiges abriebminderndes Material enthält, wobei
die aus der zweiten Kunststoffmischung gebildete, partikelförmiges abriebmindemdes Material enthaltende Schicht (4) der Dekorfolie (1) auf der der Druckschicht (2) gegenüberliegenden Seite der Papierschicht (3) aufgetragen und auf die Oberseite eines imprägnierten Dekorpapiers (7) laminiert ist, welches sich auf der Oberseite des Trägers (5) befindet.

2. Laminat nach Anspruch 1,
**dadurch gekennzeichnet, dass** die Papierschicht (3) der Dekorfolie (1) eine spezifische Rohpapiermasse im Bereich von 15 bis 35 g/m² aufweist.

3. Laminat nach Anspruch 1 oder 2,
**dadurch gekennzeichnet, dass** die erste Kunststoffmischung und/oder die zweite Kunststoffmischung aus einem Aminoharz, insbesondere aus einem in flüssiger Form applizierten und danach ausgehärtetem MelaminFormaldehyd-Harz, besteht.

4. Laminat nach einem der Ansprüche 1 bis 3,
**dadurch gekennzeichnet, dass** das partikelförmige abriebmindemde Material Korund oder Siliciumcarbid, insbesondere mit einer Korngrößenverteilung im Bereich von F 120 bis F 280 nach FEPA Standard, ist.

5. Laminat nach einem der Ansprüche 1 bis 4,
**dadurch gekennzeichnet, dass** der Anteil des partikelförmigen abriebmindernden Materials - bezogen auf 100 Masseteile der zweiten Kunststoffmischung - im Bereich von 5 bis 80 Masseteilen, vorzugsweise im Bereich von 20 bis 40 Masseteilen, liegt.

6. Laminat nach einem der Ansprüche 1 bis 5,
**dadurch gekennzeichnet, dass** die spezifische Masse der partikelförmiges abriebmindemdes Material enthaltenden Schicht (4) im Bereich von 5 bis 80 g/m² liegt.

7. Laminat nach einem der Ansprüche 1 bis 6,
**dadurch gekennzeichnet, dass** die Dekorfolie (1) eine nach einer Aushärtung und Trocknung vorliegende Restfeuchte von 3 Masseprozent bis 9 Masseprozent aufweist.

8. Laminat nach einem der Ansprüche 1 bis 7
**dadurch gekennzeichnet, dass** die Dekorfolie (1) eine spezifische Masse im Bereich von 60 bis 250 g/m² aufweist.

9. Laminat nach einem der Ansprüche 1 bis 8,
**dadurch gekennzeichnet, dass** eine Dicke (d) der Druckschicht (2) im Bereich von 4 µm bis 40 µm liegt.

10. Laminat nach einem der Ansprüche 1 bis 9,
**gekennzeichnet durch** einen Abriebwert von mindestens der Klasse AC3 nach DIN EN 13329.

11. Laminat nach einem der Ansprüche 1 bis 10,
**dadurch gekennzeichnet, dass** auf den Träger (5) auf der der Dekorfolie (1) gegenüberliegenden Seite ein Gegenzugpapier (6) auflaminiert ist.

12. Laminat nach einem der Ansprüche 1 bis 11,
**dadurch gekennzeichnet, dass** die Dekorfolie (1) transparent ist und zumindest an definierten Stellen optische Effektzonen aufweist, die vorzugsweise
mit einem Druckbild des darunterliegenden Dekorpapiers (7) kongruent sind.

13. Verfahren zur Herstellung eines Laminats mit einer abriebfesten Dekorfolie (1), insbesondere mit einem Overlay zur Fertigung eines Laminatfußbodens, wobei eine Papierschicht (3) einseitig mit einer Druckschicht (2) bedruckt, dann mit einer aus einer ersten Kunststoffmischung gebildeten Imprägnierung (3a) versehen und danach mit einer aus einer zweiten Kunststoffmischung gebildeten Schicht (4), die partikelförmiges abriebmindemdes Material enthält, beschichtet und auf einen Träger (5) laminiert wird,
wobei die aus der zweiten kunststoffmischung gebildete, partikelförmiges abriebmindemdes Material enthaltende Schicht (4) auf der der Druckschicht (2) gegenüberliegenden Seite der Papierschicht (3) aufgetragen und die Dekorfolie (1) mit der aus der zweiten Kunststoffmischung gebildeten, partikelförmiges abriebmindemdes Material enthaltenden Schicht (4) auf die Oberseite eines imprägnierten Dekorpapiers (7) laminiert wird, das sich auf der Oberseite des Trägers (5) befindet.

14. Verfahren nach Anspruch 13,
**dadurch gekennzeichnet, dass** die Druckschicht (2) im direkten oder indirekten Tiefdruck hergestellt wird, wobei vorzugsweise eine elektromechanisch gravierte Druckform (10) eingesetzt wird.

15. Verfahren nach Anspruch 14,
**dadurch gekennzeichnet, dass** der Tiefdruck in einem halbautotypischen und autotypischen Verfahren erfolgt.

16. Verfahren nach einem der Ansprüche 13 bis 15,
**dadurch gekennzeichnet, dass** der Druck als Mehrfachdruck, vorzugsweise in einem Nass-in-Nass-Verfahren ohne Zwischentrocknung, erfolgt.

17. Verfahren nach einem der Ansprüche 13 bis 16,
**dadurch gekennzeichnet, dass** für den Druck eine polymere Zwei-Komponenten-Farbe, die einen vernetzend wirkenden Härter enthält, eingesetzt wird.

18. Verfahren nach einem der Ansprüche 13 bis 17,
**dadurch gekennzeichnet, dass** für den Druck eine Farbe, die Pigmente mit Teilchengrößen im Bereich von 5 bis 125 µm enthält, eingesetzt wird.

19. Verfahren nach Anspruch 18,
**dadurch gekennzeichnet, dass** bei Einsatz einer Farbe mit Pigment-Teilchengrößen im Bereich von 10 bis 125 µm ein Raster einer im Tiefdruck verwendeten Druckform (10) im Bereich von 40 bis 60 pro cm liegt.

20. Verfahren nach einem der Ansprüche 13 bis 17,
**dadurch gekennzeichnet, dass** für den Druck eine Farbe, die Pigmente mit Teilchengrößen im Bereich von weniger als 5 µm enthält, eingesetzt wird.

21. Verfahren nach einem der Ansprüche 13 bis 20,
**dadurch gekennzeichnet, dass** eine Anzahl von Näpfchen (11) einer im Tiefdruck verwendeten Druckform (10) im Bereich von 1000 bis 6400 pro cm², vorzugsweise von 1600 bis 3600 pro cm², liegt.

22. Verfahren nach einem der Ansprüche 13 bis 21,
**dadurch gekennzeichnet, dass** eine Tiefe von Näpfchen (11) einer im Tiefdruck verwendeten Druckform (10) durch einen Spitzenwinkel eines zur Gravur der Druckform (10) eingesetzten Stichels von 120° bestimmt ist.

23. Verfahren nach einem der Ansprüche 13 bis 22,
**dadurch gekennzeichnet, dass** eine Form von Näpfchen (11) einer im Tiefdruck verwendeten zylinderförmigen Druckform (10) durch eine Raute beschrieben wird, bei der vorzugsweise eine in Längsrichtung des Zylinders verlaufende Diagonale (DL) größer ist eine in Umfangsrichtung des Zylinders verlaufende Diagonale (DQ).

24. Verfahren nach einem der Ansprüche 13 bis 23,
**dadurch gekennzeichnet, dass** eine maximale Tiefe eines im indirekten Tiefdruck verwendeten Klischees 20 bis 35 µm beträgt.

## Claims

1. A laminate having a backing (5) and having a decorative sheet (1), such as an overlay for the production of laminate flooring or a furniture surface, wherein the decorative sheet (1) comprises a paper layer (3) which is provided with a printed layer (2) on one side, an impregnation (3a) which is formed from a first plastics mixture and a layer (4) which is formed from a second plastics mixture, which layer (4) contains particulate, abrasion-reducing material, wherein the layer (4), formed from the second plastics mixture and containing particulate, abrasion-reducing material, of the decorative sheet (1) is applied to the side, opposite the printed layer (2), of the paper layer (3) and is laminated onto the upper side of an impregnated decorative paper (7) located on the upper side of the backing (5).

2. A laminate according to claim 1, **characterised in that** the paper layer (3) of the decorative sheet (1) has a specific raw paper weight in the range from 15 to 35 g/m².

3. A laminate according to claim 1 or 2, **characterised in that** the first plastics mixture and/or the second plastics mixture consist(s) of an amino resin, in particular a melamine-formaldehyde resin applied in liquid form and cured thereafter.

4. A laminate according to any one of claims 1 to 3, **characterised in that** the particulate, abrasion-reducing material is corundum or silicon carbide, in particular with a particle-size distribution in the range from F 120 to F 280 according to FEPA standard.

5. A laminate according to any one of claims 1 to 4, **characterised in that** the proportion of the particulate, abrasion-reducing material - relative to 100 parts by weight of the second plastics mixture - lies in the range from 5 to 80 parts by weight, preferably in the range from 20 to 40 parts by weight.

6. A laminate according to any one of claims 1 to 5, **characterised in that** the specific weight of the layer (4) containing particulate, abrasion-reducing material lies in the range from 5 to 80 g/m².

7. A laminate according to any one of claims 1 to 6, **characterised in that** the decorative sheet (1) has a residual moisture from 3 weight percent to 9 weight percent present after curing and drying.

8. A laminate according to any one of claims 1 to 7, **characterised in that** the decorative sheet (1) has a specific weight in the range from 60 to 250 g/m².

9. A laminate according to any one of claims 1 to 8, **characterised in that** a thickness (d) of the printed layer (2) lies in the range from 4 µm to 40 µm.

10. A laminate according to any one of claims 1 to 9, **characterised by** an abrasion value of at least class AC3 according to DIN EN 13329.

11. A laminate according to any one of claims 1 to 10, **characterised in that** a counteracting paper (6) is laminated onto the backing (5), on the side opposite the decorative sheet (1).

12. A laminate according to any one of claims 1 to 11, **characterised in that** the decorative sheet (1) is transparent and, at least at defined sites, has optical effect zones preferably congruent with a printed image of the decorative paper (7) thereunder.

13. A method of producing a laminate having an abrasion-proof decorative sheet (1), in particular having an overlay for the manufacture of laminate flooring, wherein a paper layer (3) is printed with a printed layer (2) on one side, is then provided with an impregnation (3a) formed from a first plastics mixture and thereafter is coated with a layer (4) formed from a second plastics mixture, which layer (4) contains particulate, abrasion-reducing material, and is laminated onto a backing (5), wherein the layer (4), formed from the second plastics mixture and containing particulate, abrasion-reducing material, is applied to the side, opposite the printed layer (2), of the paper layer (3) and the decorative sheet (1) is with the layer (4), formed from the second plastics mixture and containing particulate, abrasion-reducing material, laminated onto the upper side of an impregnated decorative paper (7) located on the upper side of the backing (5).

14. A method according to claim 13, **characterised in that** the printed layer (2) is manufactured using direct or indirect intaglio printing, wherein preferably use is made of an electromechanically engraved printing block (10).

15. A method according to claim 14, **characterised in that** the intaglio printing takes place in a semi-autotypical and autotypical procedure.

16. A method according to any one of claims 13 to 15, **characterised in that** the printing takes place as multiple printing, preferably using a wet-colour procedure without intermediate drying.

17. A method according to any one of claims 13 to 16, **characterised in that** a polymeric two-component ink containing a curing agent having a crosslinking action is used for the printing.

18. A method according to any one of claims 13 to 17, **characterised in that** an ink containing pigments with particle sizes in the range from 5 to 125 µm is used for the printing.

19. A method according to claim 18, **characterised in that** when using an ink with pigment particle sizes in the range from 10 to 125 µm, a halftone screen of a printing block (10) used in intaglio printing lies in the range from 40 to 60 per cm.

20. A method according to any one of claims 13 to 17, **characterised in that** an ink containing pigments with particle sizes in the range of less than 5 µm is used for the printing.

21. A method according to any one of claims 13 to 20, **characterised in that** a number of cups (11) of a printing block (10) used in intaglio printing lies in the range from 1000 to 6400 per cm², preferably from 1600 to 3600 per cm².

22. A method according to any one of claims 13 to 21, **characterised in that** a depth of cups (11) of a printing block (10) used in intaglio printing is determined by a point angle of 120° of a graver used to engrave the printing block (10).

23. A method according to any one of claims 13 to 22, **characterised in that** a form of cups (11) of a cylindrical printing block (10) used in intaglio printing is described by a lozenge with which preferably a diagonal (DL) running in the longitudinal direction of the cylinder is longer than a diagonal (DQ) running in the circumferential direction of the cylinder.

24. A method according to any one of claims 13 to 23, **characterised in that** a maximum depth of a block used in indirect intaglio printing is 20 to 35 µm.

## Revendications

1. Stratifié comportant un support (5) et un film de décoration (1) tel qu'un revêtement pour la production d'un plancher stratifié ou d'une surface de meuble, le film de décoration (1) comprenant d'un côté une couche de papier (3) dotée d'une couche d'impression (2), une imprégnation (3a) formée à partir d'un premier mélange de matières plastiques et une couche (4) formée à partir d'un deuxième mélange de matières plastiques qui contient un matériau particulaire réduisant l'abrasion, dans lequel
la couche (4) du film de décoration (1) contenant un matériau particulaire réduisant l'abrasion formée à partir du deuxième mélange de matières plastiques est appliquée sur le côté de la couche de papier (3) opposé à la couche d'impression (2) et est stratifiée sur la face supérieure d'un papier de décoration imprégné (7) qui se trouve sur la face supérieure du support (5).

2. Stratifié selon la revendication 1, **caractérisé en ce que** la couche de papier (3) du film de décoration (1) présente un poids spécifique de papier brut de l'ordre de 15 à 35 g/m².

3. Stratifié selon la revendication 1 ou 2,
**caractérisé en ce que** le premier mélange de matières plastiques et/ou le deuxième mélange de matières plastiques consiste en une résine aminée, en particulier, appliquée sous forme fluide et ensuite, en une résine de mélamine - formaldéhyde durcie.

4. Stratifié selon l'une des revendications 1 à 3,
**caractérisé en ce que** le matériau particulaire réduisant l'abrasion est le corindon ou le carbure de silicium, en particulier présentant une répartition des tailles de grains dans une plage de F 120 à F 280 selon la norme FEPA.

5. Stratifié selon l'une des revendications 1 à 4,
**caractérisé en ce que** la proportion de matériau particulaire réduisant l'abrasion, par rapport à 100 parties en poids du deuxième mélange de matières plastiques se situe dans une plage allant de 5 à 80 parties en poids, de préférence dans une plage allant de 20 à 40 parties en poids.

6. Stratifié selon l'une des revendications 1 à 5,
**caractérisé en ce que** le poids spécifique de la couche (4) contenant le matériau particulaire réduisant l'abrasion se situe dans une plage allant de 5 à 80 g/m².

7. Stratifié selon l'une des revendications 1 à 6,
**caractérisé en ce que** le film de décoration (1) présente une humidité résiduelle après un durcissement et un séchage de 3 % en poids à 9 % en poids.

8. Stratifié selon l'une des revendications 1 à 7,
**caractérisé en ce que** le film de décoration (1) présente un poids spécifique compris dans une plage allant de 60 à 250 g/m².

9. Stratifié selon l'une des revendications 1 à 8,
**caractérisé en ce qu'**une épaisseur (d) de la couche d'impression (2) se situe dans une plage de allant 4 µm à 40 µm.

10. Stratifié selon l'une des revendications 1 à 9,
**caractérisé par** une valeur d'abrasion au moins de la classe AC3 selon la norme DIN EN 13329.

11. Stratifié selon l'une des revendications 1 à 10,
**caractérisé en ce que**, sur le support (5) est stratifié un papier de recouvrement opposé (6) se trouvant de l'autre côté du film de décoration (1).

12. Stratifié selon l'une des revendications 1 à 11,
**caractérisé en ce que** le film de décoration (1) est transparent et présente au moins à des endroits définis, des zones à effet optique qui coïncident de préférence avec une image imprimée du papier de décoration (7) sous-jacent.

13. Procédé de production d'un stratifié comportant un film de décoration résistant à l'abrasion (1), en particulier un revêtement pour la production d'un plancher stratifié, dans lequel une couche de papier (3) est imprimée d'un côté avec une couche d'impression (2), est ensuite dotée d'une imprégnation (3a) formée du premier mélange de matières plastiques et est ensuite revêtue d'une couche (4) formée d'un deuxième mélange de matières plastiques, qui contient un matériau particulaire réduisant l'abrasion et est stratifiée sur un support (5),
dans lequel la couche (4) formée du deuxième mélange de matières plastiques contenant le matériau particulaire réduisant l'abrasion est appliquée sur le côté opposé à la couche d'impression (2) de la couche de papier (3) et le film de décoration (1) est stratifié avec la couche (4) contenant le matériau particulaire réduisant l'abrasion formé du deuxième mélange de matières plastiques sur le dessus d'un papier de décoration imprégné (7) qui se trouve sur le dessus du support (5).

14. Procédé selon la revendication 13,
**caractérisé en ce que** la couche d'impression (2) est produite par héliogravure directe ou indirecte, dans lequel de préférence un cliché d'impression (10) gravé de façon électromagnétique est utilisé.

15. Procédé selon la revendication 14,
**caractérisé en ce que** l'héliogravure s'effectue dans un procédé semi auto-typique ou auto-typique.

16. Procédé selon l'une des revendications 13 à 15,
**caractérisé en ce que** l'impression s'effectue en tant qu'impression multiple, de préférence dans un procédé mouillé sur mouillé sans séchage intermédiaire.

17. Procédé selon l'une des revendications 13 à 16,
**caractérisé en ce que**, pour l'impression, on utilise une encre polymère à deux composants qui contient un durcisseur à effet réticulant.

18. Procédé selon l'une des revendications 13 à 17, **caractérisé en ce que** pour l'impression, on utilise une encre qui contient des pigments présentant une taille de particules de l'ordre de 5 à 125 µm.

19. Procédé selon la revendication 18,
**caractérisé en ce que** lors de l'utilisation d'une encre comportant des particules de pigment présentant une taille de l'ordre de 10 à 125 µm, une trame d'un cliché d'impression (10) utilisé pour l'héliogravure se situe dans une plage allant de 40 à 60 par cm.

20. Procédé selon l'une des revendications 13 à 17,
**caractérisé en ce que** pour l'impression, on utilise une encre qui contient des pigments présentant une taille de particules dans une plage inférieure à 5 µm.

21. Procédé selon l'une des revendications 13 à 20,
**caractérisé en ce qu'**un nombre d'alvéoles (11) d'un cliché d'impression (10) utilisé en héliogravure se situe dans une plage allant de 1000 à 6400 par cm², de préférence de 1600 à 3600 par cm².

22. Procédé selon l'une des revendications 13 à 21, **caractérisé en ce qu'**une profondeur d'alvéole (11) d'un cliché d'impression (10) utilisé en héliogravure est déterminée par un angle de pointe d'un poinçon utilisé pour la gravure d'un cliché d'impression (10) de 120°.

23. Procédé selon l'une des revendications 13 à 22,
**caractérisé en ce qu'**une forme d'alvéole (11) d'un cliché d'impression (10) cylindrique utilisé en héliogravure est décrite par un losange dans lequel de préférence une diagonale (DL) évoluant dans le sens longitudinal du cylindre est plus grande qu'une diagonale (DQ) évoluant dans le sens périphérique du cylindre.

24. Procédé selon l'une des revendications 13 à 23,
**caractérisé en ce qu'**une profondeur maximale d'un cliché utilisé en héliogravure indirecte est de 20 à 35 µm.
